# EUROPÄISCHE PATENTSCHRIFT

(11) **EP 0 290 751 B1**
(45) Veröffentlichungstag und Bekanntmachung des Hinweises auf die Patenterteilung: **01.09.1993**
(21) Anmeldenummer: 88104272.5
(22) Anmeldetag: 17.03.1988
(51) Int. Cl.: G01J 5/06

(54) **Infrarot-Strahlungsdetektor**
Detecting device for infrared radiation
Détecteur de rayonnement infrarouge

(30) Priorität: 15.05.1987 DE 3716358
(43) Veröffentlichungstag der Anmeldung: 17.11.1988
(73) Patentinhaber: STEINHEIL OPTRONIK GMBH, D-85737 Ismaning (DE)
(72) Erfinder: Krause, Gerhard, D-8200 Rosenheim Egarten (DE)
(74) Vertreter: Pätzold, Herbert, Dr.-Ing.

(56) Entgegenhaltungen:
- EP-A- 0 044 791
- DE-B- 1 223 585
- FR-A- 2 300 332
- US-A- 3 875 408
- US-A- 4 011 452
- US-A- 4 217 026

## Beschreibung

Die Erfindung betrifft einen Infrarot-Detektor gemäß dem Oberbegriff des Anspruches 1.

Infrarot-Detektoren erfordern bekanntlich niedrige Betriebstemperaturen zur Erzielung möglichst hoher Detektorleistungen. Es ist bekannt, Detektoren in einem doppelwandigen Kühlgefaß anzuordnen. Dabei befinden sich die Infrarot-Detektoren im thermischen Kontakt mit der Bodenfläche der Innenwand, die auf Tieftemperatur gekühlt ist. Die Detektoren werden somit bei tiefen Temperaturen betrieben. Hierbei ist bekannt in der Umgebung der Detektoren ein Vakuum vorzusehen.

Ein Infrarot-Detektor der eingangs genannten Art ist z.B. durch die DE-AS 12 23 585 bekannt. Der Detektor befindet sich in einer Vakuumkammer eines doppelwandigen Kühlgefäßes in Verbindung mit einer Tiefkühleinrichtung. Innerhalb der Vakuumkammer ist eine das Detektorelement rohrförmig umgebene, seitliche Abschirmwand mit einer dem Fenster zugewandten Strahleneintrittsöffnung angeordnet. Durch ein Abbildungssystem wird Strahlung, die von einem Ziel ausgeht, auf das Detektorelement konzentriert. Die bekannte Einrichtung hat den Nachteil, daß nicht nur aus dem Abbildungsstrahlengang, sondern auch von der Seite her Strahlung auf den Detektor gelangen kann, was zu unerwünschten Störungen führt. Bei diesen Störstrahlen handelt es sich um Strahlungen von ungekühlten Komponenten der Detektoreinrichtung und des Gerätes, die hauptsächlich von den Seiten her außerhalb des Empfangswinkels auf den Detektor zum Einfallen kommen.

Ein anderer Infrarot-Detektor ist aus US-A-4 011 452 bekannt.

Aufgabe der Erfindung ist es, eine Detektoreinrichtung der eingangs genannten Art so auszubilden, daß von außerhalb des Abbildungsstrahlenganges (Nutzstrahlung) im wesentlichen keine Infrarot-Störstrahlung auf den Detektor gelangen kann, insbesondere nicht von den Wandungen des Gehäuses und der Linsenfassungen. Dabei soll auch das durch die Störstrahlung verursachte Rauschen weitgehend reduziert werden.

Bei einer Detektoreinrichtung der eingangs genannten Art wird die vorstehende Aufgabe erfindungsgemäß mit den kennzeichnenden Merkmalen des Anspruches 1 gelöst.

Vorteilhafte Ausführungen und Weiterbildungen der Erfindung ergeben sich aus den Merkmalen der Unteransprüche.

Eine bevorzugte Ausführungsform nach der Erfindung enthält ein doppelwandiges Kühlgefaß, wobei eine Vakuumkammer zwischen der Innen- und der Außenwand ausgebildet ist. Die Kühleinrichtung befindet sich mit der Innenwand der Vakuumkammer im wärmeleitenden Kontakt. Das Detektorelement ist innerhalb der Vakuumkammer am Boden der Innenwand angebracht und befindet sich dort im wärmeleitenden Kontakt mit dem Boden. Das dem Detektorelement gegenüberliegende Fenster zum Durchtritt der von dem zu beobachtenden Objekt ausgehenden Infrarotstrahlung ist der Außenwand des Kühlgefäßes angeordnet. Ein zylindrischer Abschirmkörper (inneres Kälteschild) schließt rückseitig an den Boden der Innenwand an, um den Detektor innerhalb der Vakuumkammer von allen Seiten abzuschirmen. Am vorderen Ende des zylindrischen Abschirmkörpers weist dieser eine zentrale Strahleneintrittsöffnung auf, die dem Fenster zugewandt ist. Diese Öffnung wird durch einen als Kugelspiegel ausgebildeten äußeren Abschirmkörper (äußeres Kälteschild) in sich selbst abgebildet. Das heißt, die Bildelemente werden um den Mittelpunkt der Öffnung gespiegelt abgebildet.

Versuche zeigten, daß mit einer solchen erfindungsgemäßen Anordnung auf den Detektor einwirkende negative Infrarot-Störstrahlungseinflüsse wesentlich verringert werden konnten.

Die Erfindung ist jedoch auf eine derartige bevorzugte Ausführung nicht beschränkt. Dem Fachmann ist ohne weiteres klar, daß auch mit geänderten Ausführungen vergleichbar gute Ergebnisse erzielbar sind, sofern die erfindungsgemäße Regel erfüllt bleibt, daß die Strahleneintrittsöffnung des inneren Abschirmkörpers durch eine äußere Optik in sich selbst abgebildet wird. Dabei kann die Strahleneintrittsöffnung auch mit dem Fenster zusammenfallen und die äußere Optik kann von einem oder mehreren hintereinander angeordneten äußeren Abschirmkörpern gebildet sein, für die dann jeweils die obige Regel gilt.

Dabei kann es sich vorteilhafterweise auch um einen Kugelspiegelabschnitt mit einer zentralen Strahlendurchtrittsöffnung handeln.

Vorteilhaft ist es, den Kugelspiegel halbkugelförmig auszubilden, wobei die Ränder des Kugelspiegels etwa in der Ebene durch die Öffnung liegen.

Es ist dem Fachmann natürlich ohne weiteres klar, daß er auch mit anderen optischen Einrichtungen die erfindungsgemäße Regel erfüllen kann. So kann der äußere Abschirmkörper bzw. die äußere optische Einrichtung zur Abbildung der Strahleneintrittsöffnung in sich selbst wenigstens teilweise auch integraler Bestandteil des Kühlgefäßes sein, so daß dann eine Unterscheidung zwischen äußeren und inneren Abschirmkörpern bzw. Kühlschildern nicht mehr in der herkömmlichen Weise gegeben ist. Zur äußeren Abschirmung kann auch eine Lochblende mit einer dem Detektor zugewandten Spiegelfläche sowie eine nachgeschaltete Linse und ein Kugelspiegel mit einer zentralen Öffnung gehören, der außerhalb des Kühlgefäßes unmittelbar vor dem Fenster angeordnet ist.

Es ist dem Fachmann auch klar, daß der gekrümmte Lochspiegel nicht sphärisch gekrümmt sein muß. Bei asphärischer Krümmung ist zwischen dem Lochspiegel und dem Fenster des Kühlgefäßes ein der asphärischen Krümmung angepaßter Linsenkörper angeordnet.

Bevorzugt wird jedoch ein sphärisch gekrümmter Lochspiegel, insbesondere ein Halbkugelspiegel verwendet.

Die Erfindung wird nachstehend anhand eines Ausführungsbeispielses beschrieben, das in einer Zeichnung schematisch dargestellt ist.

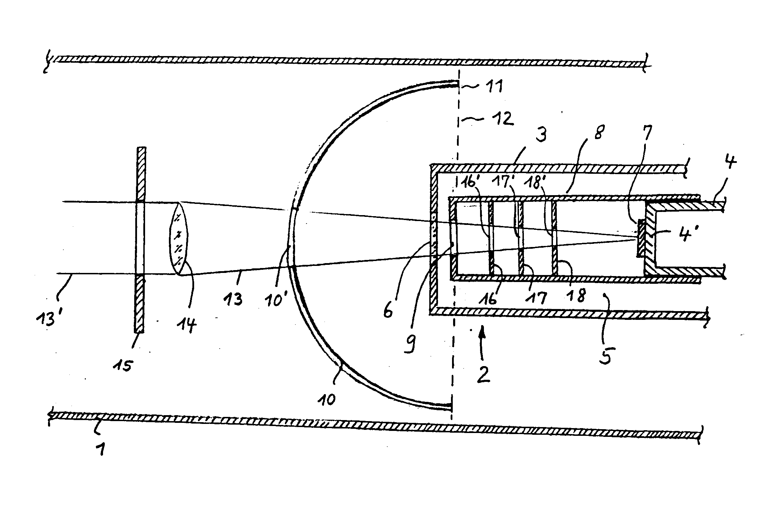

Die Zeichnung zeigt einen Teil eines Gehäuses 1 für eine erfindungsgemäße Infrarot-Detektoreinrichtung bzw. ein Wärmebildgerät. Innerhalb des Gehäuses 1 ist ein doppelwandiges Kühlgehäuse 2 angeordnet, das ebenfalls nur teilweise dargestellt ist. Die äußere Wandung des Kühlgefäßes 2 ist mit 3 und die innere Wandung mit 4 bezeichnet. Die äußere und die innere Wandung 3 und 4 begrenzen eine Vakuumkammer 5. Der Boden 4' der Vakuumkammer an der inneren Wandung 4 ist mit einer nicht dargestellten, an sich bekannten Kühleinrichtung im wärmeleitenden Kontakt. Das vordere Ende der äußeren Wandung 3 weist ein Fenster 6 z.B. aus Germanium auf, das für Infrarot-Strahlung durchlässig ist. Innerhalb der Vakuumkammer 5 befindet sich am Boden 4' der inneren Wandung ein Detektorelement 7 im wärmeleitenden Kontakt. Das Detektorelement ist von einem inneren zylindrischen Strahlenabschirmkörper 8 umgeben, der mit seinem hinteren Ende an den Boden 4' der inneren Wand 4 wärmeleitend angeschlossen ist. Der innere Strahlenabschirmkörper besitzt an seinem vorderen Ende eine Strahleneintrittsöffnung 9, die dem Fenster 6 zugeordnet ist.

Außerhalb des Kühlgefäßes 2 ist ein sphärischer Lochspiegel 10 mit einer Strahlendurchtrittsöffnung 10' vorgesehen, der derart gegenüber dem Kühlgefäß 2 mit dem inneren Strahlenabschirmkörper 8 angeordnet ist, daß die Strahleneintrittsöffnung durch den Lochspiegel 10 in sich selbst abgebildet wird.

Der Lochspiegel 10 dient als äußerer Strahlenabschirmkörper 10, der vorteilhafterweise halbkugelförmig ausgebildet ist, wobei der äußere Rand 11 des Lochspiegels 10 in der gestrichelt angedeuteten Ebene 12 durch die Strahleneintrittsöffnung 9 liegt.

Im Strahlengang 13 des auf dem Detektor 7 zur Abbildung kommenden Wärmebildes ist dem Lochspiegel 10 eine Linse 14 mit einer Lochblende 15 vorgeschaltet, durch die die parallelen Wärmebildstrahlen 13' hindurchtreten, die von einem nicht dargestellten, an sich bekannten Scanner abgegeben werden.

Dadurch, daß durch den Lochspiegel 10 die Strahleintrittsöffnung 9 in sich selbst abgebildet wird, erreichen im Idealfall keine äußeren Infrarotstrahlen die Strahleneintrittsöffnung. Mit anderen Worten, wenn die Strahleneintrittsöffnung durch den äußeren Abschirmkörper, hier in der Gestalt eines sphärischen Spiegels 10 fehlerfrei auf sich selbst abgebildet wird, dann kann es keine äußeren Störstrahlen geben, die durch die Öffnung in den inneren zylindrischen Abschirmkörper 8 eintreten können.

Es kann von Vorteil sein, in dem inneren Abschirmkörper 8 parallele Lochwände 16, 17 und 18 vorzusehen, die gestrichelt dargestellt sind und jeweils zum Eintritt der Wärmebildstrahlen 13 stufenweise enger ausgebildete Öffnungen 16', 17' und 18' aufweisen.

Der äußere Abschirmkörper ist hier - wie gesagt - so ausgebildet, daß die äußerste Strahleneintrittsöffnung 9 in sich selbst abgebildet wird. Es ist dem Fachmann klar, daß er auch zusätzliche äußere Abschirmkörper entsprechend dem Abschirmkörper 10 vorsehen kann, durch die zusätzlich die Öffnung 16' bzw. 17' bzw. 18' in sich selbst abgebildet werden. Die Wandungen 16, 17 und 18 müssen keine rechten Winkel mit dem inneren zylindrischen Abschirmkörper 8 bilden.

Die beiden Abschirmkörper 8 und 10 haben demnach die Funktion eines inneren bzw. äußeren Kälteschildes, wobei im Beispielsfalle lediglich der innere Abschirmkörper über die innere Wandung 4 des Kühlgefäßes wärmeleitend an die nicht dargestellte Kühleinrichtung angeschlossen ist. Es ist klar, daß der äußer Abschirmkörper 10 ebenfalls wärmeleitend an die Kühleinrichtung angeschlossen sein kann.

## Patentansprüche

1. Infrarot-Strahlendetektoreinrichtung mit einer einen Detektor schutzhüllenartig umfassenden, eine Strahleneintrittsöffnung aufweisenden gekühlten Abschirmeinrichtung, die Infrarot-Störstrahlungen abschirmt,
**dadurch gekennzeichnet**,
daß die Strahleneintrittsöffnung (9) durch eine außerhalb der gekühlten Abschirmeinrichtung (8) liegende abbildende optische Einrichtung (10) in sich selbst abgebildet ist.

2. Detektoreinrichtung nach Anspruch 1, dadurch gekennzeichnet, daß die Abschirmeinrichtung (8) innerhalb eines das Detektorelement (7) aufnehmenden Kühlgefäßes (2) angeordnet ist und eine innere Abschirmung bildet und daß die optische Einrichtung (10) außerhalb des Kühlgefäßes angeordnet ist und eine äußere Abschirmeinrichtung bildet.

3. Detektoreinrichtung nach Anspruch 2, dadurch gekennzeichnet, daß das Kühlgefäß ein Infrarotfenster (6) aufweist und daß die Strahleneintrittsöffnung (9) dem Infrarotfenster (6) zugewandt ist.

4. Detektoreinrichtung nach Anspruch 3, dadurch gekennzeichnet, daß die Strahleneintrittsöffnung (9) und das Infrarotfenster (6) nahe beieinanderliegen.

5. Detektoreinrichtung nach Anspruch 2, dadurch gekennzeichnet, daß das Kühlgefäß (2) doppelwandig ausgebildet ist, daß eine Vakuumkammer (5) zwischen der Innen- (4) und der Außenwand (3) des Gefäßes (2) gebildet ist, daß eine Kühleinrichtung mit der Innenwand im wärmeleitenden Kontakt ist, daß das Detektorelement innerhalb der Vakuumkammer (5) am Boden (4') der Innenwand (4) angebracht ist und im wärmeleitenden Kontakt mit dem Boden steht, daß das Infrarotfenster (6) im Boden der Außenwand (3) angeordnet ist und daß die innere Abschirmung (8) aus einem zylindrischen Abschirmkörper besteht, dessen den Detektor rohrförmig umgebende Wandung an die Innenwand (4) anschließt und die Strahleneintrittsöffnung (9) am vorderen Ende des zylindrischen Abschirmkörpers von dem Infrarotfenster einen Abstand aufweist.

6. Detektoreinrichtung nach einem oder mehreren der vorstehenden Ansprüche, dadurch gekennzeichnet, daß die optisch abbildende Einrichtung von wenigstens einem Hohlspiegelabschnitt (10) gebildet ist, der eine zentrale Strahlendurchtrittsöffnung (10') aufweist und der in den Strahlengang der Nutzstrahlung zwischen einem reellen Zwischenbild eines Objekts und dem Detektor angeordnet ist, wobei die Spiegelfläche dem Detektor zugewandt ist und der Krümmungsmittelpunkt des Hohlspiegelabschnittes im Zentrum der Strahleneintrittsöffnung (9) liegt.

7. Detektoreinrichtung nach Anspruch 6, dadurch gekennzeichnet, daß der Hohlspiegel eine Halbkugel bildet.

8. Detektoreinrichtung nach Anspruch 7, dadurch gekennzeichnet, daß die Ebene durch die Strahleneintrittsöffnung von dem Rand des Kugelspiegels wenigstens erreicht ist.

9. Detektoreinrichtung nach Anspruch 1, dadurch gekennzeichnet, daß zur optischen Einrichtung ein Spiegel mit einer zentralen Öffnung zum Durchtritt der Nutzstrahlung und wenigstens eine vorgeschaltete Linse gehören.

10. Detektoreinrichtung nach Anspruch 9, dadurch gekennzeichnet, daß der Spiegel von einer Ringscheibe gebildet ist.

11. Detektoreinrichtung nach einem oder mehreren der vorstehenden Ansprüche, dadurch gekennzeichnet, daß die Abschirmeinrichtung (8) mehrere parallele Lochwände (16, 17, 18) enthält und daß mehrere koaxial hintereinander angeordnete Hohlspiegel vorgesehen sind, deren Krümmungsmittelpunkte jeweils im Zentrum der Strahleneintrittsöffnung (16', 17', 18') der Lochwände liegen.

## Claims

1. Infrared radiation detector apparatus with a cooled shielding device which encompasses a detector after the fashion of a protective casing and comprises a beam inlet opening and which screens out the infrared disturbing radiation, characterised in that the beam inlet opening (9) is imaged by an imaging optical device (10) located outside the cooled shielding device (8), in itself.

2. Detector apparatus according to claim 1, characterised in that the shielding device (8) is arranged inside a cooling vessel (2) containing the detector element (7) and forms an inner shield and in that the optical device (10) is arranged outside the cooling vessel and forms an outer shielding device.

3. Detector apparatus according to claim 2, characterised in that the cooling vessel comprises an infrared window (6) and in that the beam inlet opening (9) faces towards the infrared window (6).

4. Detector apparatus according to claim 3, characterised in that the beam inlet opening (9) and the infrared window (6) are located close to each other.

5. Detector apparatus according to claim 2, characterised in that the cooling vessel (2) is double-walled, in that a vacuum chamber (5) is formed between the inner (4) and outer (3) walls of the vessel (2), in that a cooling device is in heat-conducting contact with the inner wall, in that the detector element is mounted inside the vacuum chamber (5) on the bottom (4') of the inner wall (4) and is in heatconducting contact with the bottom, in that the infrared window (6) is arranged in the bottom of the outer wall (3) and in that the inner shield (8) consists of a cylindrical shielding body of which the wall surrounding the detector in tube-like fashion adjoins the inner wall (4) and the beam inlet opening (9) at the front end of the cylindrical shielding body is spaced apart from the infrared window.

6. Detector apparatus according to one or more of the preceding claims, characterised in that the optical imaging device is formed by at least one hollow mirror section (10) which comprises a central beam transmitting opening (10') and which is arranged in the path of the effective radiation between a real intermediate image of an object and the detector, wherein the mirror surface faces towards the detector and the centre of curvature of the hollow mirror section is located at the centre of the beam inlet opening (9).

7. Detector apparatus according to claim 6, characterised in that the hollow mirror forms a hemisphere.

8. Detector apparatus according to claim 7, characterised in that the plane through the beam inlet opening is at least reached by the edge of the spherical mirror.

9. Detector apparatus according to claim 1, characterised in that the optical device includes a mirror with a central opening for passage of the effective radiation and at least one lens mounted in front.

10. Detector apparatus according to claim 9, characterised in that the mirror is formed by a ring plate.

11. Detector apparatus according to one or more of the preceding claims, characterised in that the shielding device (8) contains several parallel apertured walls (16, 17, 18) and in that several hollow mirrors arranged coaxially one behind the other are provided, of which the centres of curvature are in each case located at the centre of the beam inlet opening (16', 17', 18') of the apertured walls.

## Revendications

1. Dispositif détecteur de rayonnement infrarouge comportant un dispositif de protection refroidi qui protège contre les rayons infrarouges perturbateurs, renfermant un détecteur à la manière d'une enveloppe de protection et comportant un orifice d'entrée des rayons, caractérisé en ce que l'orifice d'entrée (9) des rayons est représenté en soi par un dispositif, (10) de reproduction optique situé à l'extérieur du dispositif de protection (8) refroidi.

2. Dispositif détecteur selon la revendication 1, caractérisé en ce que le dispositif de protection (8) est disposé à l'intérieur d'un récipient de refroidissement (2) recevant l'élément détecteur (7) et forme une protection interne, et en ce que le dispositif optique (10) est disposé à l'extérieur du récipient de refroidissement et forme un dispositif de protection externe.

3. Dispositif détecteur selon la revendication 2, caractérisé en ce que le récipient de refroidissement comporte une fenêtre (6) à infrarouge et en ce que l'orifice d'entrée (9) des rayons est tourné vers la fenêtre (6) à infrafouge.

4. Dispositif détecteur selon la revendication 3, caractérisé en ce que l'orifice d'entrée (9) des rayons et la fenêtre (6) à infrarouge sont proches l'un de l'autre.

5. Dispositif détecteur selon la revendication 2, caractérisé en ce que le récipient de refroidissement (2) est à double paroi, qu'une chambre à vide (5) est formée entre la paroi interne (4) et la paroi externe (3) du récipient (2), qu'un dispositif de refroidissement est en contact thermoconducteur avec la paroi interne, que l'élément détecteur est logé au fond (4') de la paroi interne (4) à l'intérieur de la chambre à vide (5) et est en contact thermoconducteur avec le fond, que la fenêtre (6) à infrarouge est disposée au fond de la paroi externe (3) et que la protection interne (8) est formée d'un élément cylindrique de protection dont la paroi entourant le détecteur à la manière d'un tube est contiguë à la paroi interne (4), et l'orifice d'entrée (9) des rayons à l'extrémité arrière de l'élément cylindrique de protection présente un intervalle par rapport à la fenêtre à infrarouge.

6. Dispositif détecteur selon une ou plusieurs des revendications précédentes, caractérisé en ce que le dispositif de reproduction optique est formé d'au moins une section de miroir concave (10) qui comporte un orifice central (10') de passage des rayons et est disposé dans le sens de marche du rayonnement utile entre une image intermédiaire réelle d'un objet et le détecteur, la surface du miroir étant tournée vers le détecteur, et le centre de courbure de la section de miroir concave étant situé au centre de l'orifice (9) d'entrée des rayons.

7. Dispositif détecteur selon la revendication 6, caractérisé en ce que le miroir concave forme une demisphère.

8. Dispositif détecteur selon la revendication 7, caractérisé en ce que le plan traversant l'orifice d'entrée des rayons est au moins atteint par le bord du miroir sphérique.

9. Dispositif détecteur selon la revendication 1, caractérisé en ce qu'un miroir comportant un orifice central pour le passage du rayonnement utile, et au moins une lentille placée en amont font partie du dispositif optique.

10. Dispositif détecteur selon la revendication 9, caractérisé en ce que le miroir est formé d'un disque annulaire.

11. Dispositif détecteur selon une ou plusieurs des revendications précédentes, caractérisé en ce que le dispositif de protection (8) contient plusieurs parois perforées (16, 17, 18) parallèles, et que plusieurs miroirs concaves coaxiaux disposés les uns derrière les autres sont prévus, dont les centres de courbure sont situés à chaque fois au centre de l'orifice d'entrée des rayons (16', 17', 18') des parois perforées.
